# EUROPÄISCHE PATENTANMELDUNG

(11) **EP 4 190 755 A1**
(43) Veröffentlichungstag der Anmeldung: **07.06.2023**
(21) Anmeldenummer: 22211189.0
(22) Anmeldetag: 02.12.2022
(51) Int. Cl.: C03B 9/193

(54) **PEGELBETÄTIGUNGSVORRICHTUNG FÜR EINE GLASMASCHINE**

(30) Priorität: 03.12.2021 LU 500960
(71) Anmelder: Duran Produktions GmbH & Co. KG, 55122 Mainz (DE)
(72) Erfinder: CARL, Jens, 55271 Stadecken-Elsheim (DE); CHRIST, Alois, 65207 Wiesbaden (DE)
(74) Vertreter: Hoffmann, Jürgen

(57) **Zusammenfassung**

Die Erfindung betrifft eine Pegelbetätigungsvorrichtung für eine Glasmaschine, insbesondere für eine IS-Maschine, die eine Antriebsvorrichtung und eine Ankoppelvorrichtung zum Ankoppeln eines Pegels aufweist, wobei die Antriebsvorrichtung dazu ausgebildet ist, die Ankoppelvorrichtung vertikal zwischen einer unteren Position und einer oberen Position zu bewegen. Die Pegelbetätigungsvorrichtung zeichnet sich dadurch aus, dass der vertikale Abstand eines unteren Endes der Antriebsvorrichtung bis zu der sich in der unteren Position befindlichen Ankoppelvorrichtung kleiner ist, als der vertikale Abstand zwischen der unteren Position und der oberen Position.

## Beschreibung

Die Erfindung betrifft eine Pegelbetätigungsvorrichtung für eine Glasmaschine, insbesondere für eine IS-Maschine (Individual Section machine), die eine Antriebsvorrichtung und eine Ankoppelvorrichtung zum Ankoppeln eines Pegels aufweist, wobei die Antriebsvorrichtung dazu ausgebildet ist, die Ankoppelvorrichtung vertikal zwischen einer unteren Position und einer oberen Position zu bewegen.

Glasmaschinen werden im Bereich der Hohl-, Press- und Tafelglasproduktion eingesetzt. Die sogenannte IS-Maschine ist die am weitesten verbreitete Maschine in der Hohlglasproduktion. Beim Press-Blas-Prozess wird ein Külbel mittels eines durch eine Mündungsform in eine Vorform eingeführten Stempels, der Pegel genannt wird, vorgeformt. Konkret läuft der Vorformprozess zumeist so ab, dass ein flüssiger Glastropfen von oben in eine geschlossene Vorform verbracht wird, an deren unterer Öffnung das Mündungswerkzeug angeschlossen ist. Die Öffnung der Vorform, durch die der Glastropfen eingeführt wurde, wird sodann mittels eines Vorformbodens verschlossen. Nach dem Verschließen der Vorform wird das Glas durch eine Aufwärtsbewegung des Pegels gegen die formgebende Kontur der Vorform, des Mündungswerkzeuges und des Vorformbodens gedrückt und dadurch vorgeformt. Anschließend wird das Külbel aus der Vorform entfernt und in einem nachfolgenden Herstellungsschritt in einer Fertigform durch Druckluft zu seiner endgültigen Form ausgeblasen.

Aus DE 698 10 883 T2 ist ein Antriebsmechanismus für Plungerkolben in einer Glasflaschenformmaschine bekannt. Der Antriebsmotor beinhaltet Hauptzahnräder, die in die Verzahnung von stabförmigen Hauptantriebselemente eingreifen, um diese in vertikaler Richtung zu bewegen. Die stabförmigen Hauptantriebselemente sind nicht unmittelbar an die Plungerkolben angekoppelt, sondern über ein Lastausgleichssystem, das Hilfsritzel sowie weitere Zahnstangen, die mit den Hilfsritzeln in Zahneingriff stehen, beinhaltet.

Aus dem deutschen Gebrauchsmuster DE 20211 783 U1 ist ein Pressstempelmechanismus einer Glasformmaschine bekannt. Der Pressstempelmechanismus einen ersten Antrieb auf, der über eine Gewindespindel und eine Gewindemutter mit einer Traverse gekoppelt ist, die die Pressstempel trägt. Der erste Antrieb bewegt die Traverse bei jedem Arbeitszyklus in eine untere Ruhestellung, eine mittlere Ladestellung und schließlich eine obere Pressstellung. Der Pressstempelmechanismus weist außerdem einen zweiten Antrieb auf, mittels dem eine Höhengrundeinstellung ermöglicht ist. Aus der Deutschen Patentschrift DE 102017004627 B3 ist ein ähnlicher Pressstempelmechanismus bekannt.

Es ist die Aufgabe der vorliegenden Erfindung, eine Pegelbetätigungsvorrichtung anzugeben, die ganz besonders vielseitig einsetzbar ist.

Die Aufgabe wird durch eine Pegelbetätigungsvorrichtung der eingangs genannten Art gelöst, die dadurch gekennzeichnet ist, dass der vertikale Abstand eines unteren Endes der Antriebsvorrichtung bis zu der sich in der unteren Position befindlichen Ankoppelvorrichtung kleiner ist, als der vertikale Abstand zwischen der unteren Position und der oberen Position.

Die Erfindung hat den ganz besonderen Vorteil, dass eine Glasmaschine, insbesondere eine IS-Maschine, die mit einer erfindungsgemäßen Pegelbetätigungsvorrichtung ausgerüstet ist, einfach für die Herstellung unterschiedlicher Glasgegenstände durch Ankoppeln des jeweils erforderlichen Pegels unmittelbar genutzt oder einfach umgerüstet werden kann. Insbesondere ist es vorteilhaft nicht erforderlich, umfangreiche Umbaumaßnahmen an der Glasmaschine vornehmen zu müssen, wenn von der Produktion einer Serie eines Glasgegenstandes auf die Produktion einer Serie eines anderen Glasgegenstandes gewechselt werden muss. Ganz insbesondere wird durch die Erfindung vermieden, zusätzliche Distanzstücke im Bereich der Vorformeinheit und/oder im Bereich der Fertigformeinheit und/oder im Bereich eines Übergabemechanismus jeweils ein- oder ausbauen zu müssen, um die Verwendung unterschiedlicher und insbesondere unterschiedlich großer Pegel realisieren zu können.

Vielmehr ermöglicht es die vorliegende Erfindung, ganz unterschiedliche Vorformen und Pegel verwenden zu können, wobei zumeist lediglich der jeweils erforderliche Fahrweg des Pegels vorgegeben, insbesondere einprogrammiert, werden muss. Aufgrund der besonderen Ausgestaltung der erfindungsgemäßen Pegelbetätigungsvorrichtung ist es (abgesehen von dem Aufwand für das Austauschen des Pegels) insbesondere möglich, weitgehend ohne zusätzlichen Umbauaufwand der Glasmaschine auch besonders lange Pegel verwenden zu können, beispielsweise um besonders großvolumige Glasbehälter, insbesondere großvolumige Glasflaschen, herstellen zu können. Beispielsweise ermöglicht es die Erfindung, insbesondere im Press-Blas-Verfahren, Glasflaschen mit einem Füllvolumen von 5 Litern mit einer handelsüblichen Glasmaschine, insbesondere IS-Maschine, herstellen zu können, ohne dass ein aufwändiger Umbau der Glasmaschine erforderlich ist. Allerding ist es auch möglich, unmittelbar anschließend an die Produktion einer Serie besonders großvolumiger Glasbehälter wieder sehr kleinvolumige Glasbehälter, insbesondere kleinvolumige Glasflaschen, mit derselben Glasmaschine herstellen zu können, weitgehend ohne dass ein nennenswerter Umbauaufwand der Glasmaschine erforderlich ist.

Die erfindungsgemäße Pegeibetätigungsvorrichtung kann ganz besonders vorteilhaft, insbesondere auch im Hinblick auf das Herstellen besonders großvolumiger Glasbehälter (insbesondere von Glasbehältern mit einem Fassungsvolumen von mehr als 4 Litern oder von genau 5 Litern oder von mehr als 5 Litern) bei Glasmaschinen eingesetzt werden, die im Press-Blas-Verfahren arbeiten. Allerdings ist die Verwendbarkeit der erfindungsgemäßen Pegelbetätigungsvorrichtung nicht auf dieses Herstellverfahren beschränkt. Insbesondere im Hinblick auf das Herstellen besonders großvolumiger Glasbehälter ermöglicht es die erfindungsgemäße Pegelbetätigungsvorrichtung vorteilhaft, eine vertikale Pegelbewegung zu realisieren, die länger ist, als die vertikale Höhe der Antriebsvorrichtung.

Bei einer ganz besonders vorteilhaften Ausführung ist die Pegelbetätigungsvorrichtung pneumatisch, insbesondere ausschließlich pneumatisch, angetrieben. Dies hat den ganz besonderen Vorteil, dass die bei üblichen Glasmaschinen ohnehin vorhandene Druckluftversorgung genutzt werden kann. Alternativ ist es beispielsweise auch möglich, dass die Antriebsvorrichtung hydraulisch, insbesondere ausschließlich hydraulisch, angetrieben ist.

Bei einer ganz besonders präzise steuerbaren Ausführung ist die Antriebsvorrichtung elektrisch, insbesondere servoelektrisch, angetrieben. Insbesondere kann die Antriebsvorrichtung ausschließlich elektrisch angetrieben sein. Eine solche Ausführung erlaubt eine besonders präzise Steuerung der Pegelbetätigungsvorrichtung.

Bei einer besonderen Ausführung der Pegelbetätigungsvorrichtung weist die Antriebsvorrichtung wenigstens eine Antriebseinheit auf.

Bei einer besonders einfach und robust realisierbaren Ausführung bewirkt die Antriebseinheit eine Linearbewegung eines Abtriebsbauteils, das direkt oder indirekt mit der Ankoppelvorrichtung wirkverbunden ist. Es ist allerdings auch möglich, dass die Antriebseinheit dazu ausgebildet ist, eine andere Bewegung, beispielsweise eine Rotationsbewegung eines Abtriebsbauteils zu bewirken.

In ganz besonders vorteilhafter Weise kann die Antriebseinheit einen, insbesondere pneumatisch oder hydraulisch angetriebenen, Teleskopzylinderantrieb aufweisen. Unter einem Teleskopzylinderantrieb ist insbesondere eine pneumatisch oder hydraulisch angetriebener Linearmotorzu verstehen, bei dem ein Kolben, an dem eine Kolbenstange befestigt ist, in einem Zylinder durch Beaufschlagung mit einem Fluid bewegt wird.

Alternativ oder zusätzlich kann beispielsweise auch vorgesehen sein, dass die Antriebseinheit einen Elektromotor aufweist. Hinsichtlich der Art der Antriebseinheit gibt es keine grundsätzlichen Beschränkungen.

Es ist in erfindungsgemäßer Weise möglich, dass die Antriebsvorrichtung lediglich eine einzige Antriebseinheit aufweist. Bei einer solchen Ausführung kann der Antriebseinheit beispielsweise ein Getriebe triebtechnisch nachgeschaltet sein, insbesondere um zu erreichen, dass der vertikale Abstand eines unteren Endes der Antriebsvorrichtung bis zu der sich in der unteren Position befindlichen Ankoppelvorrichtung kleiner ist, als der vertikale Abstand zwischen der unteren Position und der oberen Position. Alternativ oder zusätzlich kann die Antriebseinheit auch einen mehrstufigen Teleskopzylinderantrieb aufweisen. Ein mehrstufiger Teleskopzylinderantrieb kann insbesondere mehrere ineinander gebaute Zylinder aufweisen.

Ganz allgemein, insbesondere auch wenn mehrere Antriebseinheiten vorhanden sind, kann vorteilhaft vorgesehen sein, dass wenigstens einer Antriebseinheit ein Getriebe triebtechnisch nachgeschaltet ist. Alternativ oder zusätzlich kann vorgesehen sein, dass einer Antriebseinheit wenigstens ein Getriebe triebtechnisch parallel geschaltet ist.

Bei einer besonderen Ausführung dient das Getriebe dazu, die Bewegungen der von unterschiedlichen Antriebseinheiten angetriebenen Abtriebsbauteile, insbesondere zweier Teleskopzylinderantriebe, miteinander zu synchronisieren. Insbesondere kann das Getriebe derart angeordnet und wirkverbunden sein, dass die von unterschiedlichen Antriebseinheiten angetriebenen Abtriebsbauteile, insbesondere die Kolbenstangen zweier Teleskopzylinderantriebe, gleichzeitig gleich schnelle Bewegungen ausführen, wobei die Bewegungen unterschiedliche, insbesondere entgegengesetzte, Bewegungsrichtungen aufweisen können.

Die Antriebseinheit und das Getriebe können im Hinblick darauf, einen möglichst großen vertikalen Fahrweg der Ankoppelvorrichtung zwischen der unteren Position und der oberen Position ermöglichen zu können, räumlich (zumindest wenn sich die Ankoppelvorrichtung in der unteren Position befindet) ineinander verschachtelt angeordnet sein. Insbesondere kann vorteilhaft vorgesehen sein, dass die Antriebseinheit und das Getriebe (zumindest wenn sich die Ankoppelvorrichtung in der unteren Position befindet) in Vertikalrichtung räumlich überlappend angeordnet sind. Auf diese Weise wird der zur Verfügung stehende Bauraum besonders gut ausgenutzt.

Das der Antriebseinheit triebtechnisch nachgeschaltete Getriebe kann vorteilhaft insbesondere als ein Lineargetriebe ausgebildet sein oder ein Lineargetriebe beinhalten. Beispielsweise kann das Getriebe ein Zahnstangengetriebe oder als Zugmittelgetriebe ausgebildet sein. Insbesondere kann das Getriebe als Zahnstangengetriebe mit mehreren Zahnstangen, die über Zahnräder miteinander wirkverkoppelt sind, ausgebildet sein. Ganz insbesondere kann das Getriebe ähnlich wie bei einem Schubladenvollauszug ausgebildet sein.

Bei einer vorteilhaften Ausführung beinhaltet das Getriebe einen Spindeltrieb. Hinsichtlich der Art des Getriebes gibt es keine grundsätzlichen Beschränkungen.

Die Antriebsvorrichtung kann vorteilhaft mehrere Antriebseinheiten aufweisen.

Bei einer ganz besonders flexibel einsetzbaren Ausführung weist die Antriebsvorrichtung mehrere triebtechnisch in Reihe geschaltete Antriebseinheiten, beispielsweise eine erste Antriebseinheit und eine zweite Antriebseinheit, auf. Eine solche Ausführung hat den ganz besonderen Vorteil, dass die Antriebseinheiten unabhängig voneinander gesteuert oder geregelt werden können. Beispielsweise kann die Antriebsvorrichtung eine erste Antriebseinheit und eine zweite Antriebseinheit aufweisen, die (wenigstens wenn sich die Ankoppelvorrichtung in der unteren Position befindet) in Vertikalrichtung zumindest teilweise räumlich überlappend zueinander angeordnet sind. Auf diese Weise wird der zur Verfügung stehende Bauraum besonders gut ausgenutzt und vorteilhaft erreicht, dass ein großer Raum für die Verwendung unterschiedlicher Pegel, insbesondere auch besonders großer Pegel, zur Verfügung steht. Insbesondere kann vorteilhaft vorgesehen sein, dass die erste Antriebseinheit und/oder die zweite Antriebseinheit simultan oder nacheinander jeweils eine Linearbewegung ausführen, um die Ankoppelvorrichtung vertikal zu bewegen.

Alternativ oder zusätzlich kann die Antriebsvorrichtung mehrere triebtechnisch parallel geschaltete Antriebseinheiten aufweisen. Beispielsweise kann die Antriebsvorrichtung wenigstens zwei Teleskopzylinderantriebe aufweisen, die triebtechnisch parallel geschaltet sind. Eine solche Ausführung ermöglicht es insbesondere, die Antriebsvorrichtung besonders stabil und symmetrisch auszubilden.

Bei einer ganz besonders vorteilhaften Ausführung sind mehrere erste Antriebseinheiten vorhanden, die triebtechnisch parallel geschaltet sind, und außerdem mehrere zweite Antriebseinheiten vorhanden, die zueinander triebtechnisch parallel geschaltet und den ersten Antriebseinheiten triebtechnisch nachgeschaltet sind. Diese Ausführung hat den ganz besonderen Vorteil, dass sie besonders stabil ist, hohe Kräfte zum Verfahren des Pegels ermöglicht sind und dennoch gewährleistet ist, dass der vertikale Abstand eines unteren Endes der Antriebsvorrichtung bis zu der sich in der unteren Position befindlichen Ankoppelvorrichtung kleiner ist, als der vertikale Abstand zwischen der unteren Position und der oberen Position. Insbesondere können die Antriebseinheiten bei einer solchen Ausführung vorteilhaft als Teleskopzylinderantriebe ausgebildet sein. Im Hinblick auf eine besonders kompakte Bauweise kann insbesondere hierbei vorteilhaft vorgesehen sein, dass die einzelnen Zylinder der Teleskopzylinderantriebe in einem gemeinsamen Zylindergehäuse (beispielsweise durch mehrere zueinander parallele Bohrungen) ausgebildet sind.

Ganz allgemein kann vorteilhaft vorgesehen sein, dass die einzelnen Zylinder mehrerer Teleskopzylinderantriebe in einem gemeinsamen Zylindergehäuse ausgebildet sind. Das Zylindergehäuse kann insbesondere um einen einstückigen Grundkörper aufweisen, in dem mehrere, vorzugsweise parallele, Bohrungen eigebracht wurden, um die einzelnen Zylinder auszubilden. Insbesondere kann das Zylindergehäuse beweglich, insbesondere linear verschiebbar, beispielsweise in einem Gehäuse der Pegelbetätigungsvorrichtung gelagert sein.

Bei einer besonders vorteilhaften Ausführung bewirkt zumindest eine erste Antriebseinheit eine Bewegung des Zylindergehäuses relativ zu einem Gehäuse der Pegelbetätigungsvorrichtung, während zumindest eine zweite Antriebseinheit eine Bewegung der Ankoppelvorrichtung relativ zu dem Zylindergehäuse bewirkt. Insbesondere kann hierbei (jedoch auch unabhängig davon) vorteilhaft vorgesehen sein, dass die Kolbenstangen der Teleskopzylinderantriebe in unterschiedliche, insbesondere entgegengesetzte, Richtungen ausfahrbar sind.

Ganz allgemein kann vorteilhaft vorgesehen sein, dass die Antriebsvorrichtung eine erste Antriebseinheit und eine zweite Antriebseinheit aufweist, die wenigstens wenn sich die Ankoppelvorrichtung in der unteren Position befindet in Vertikalrichtung zumindest teilweise räumlich überlappend angeordnet sind. Auf diese Weise wird vorteilhaft ein kleines Verhältnis des vertikalen Abstandes des unteren Endes der Antriebsvorrichtung bis zu der sich in der unteren Position befindlichen Ankoppelvorrichtung relativ zum dem vertikalen Abstand zwischen der unteren Position und der oberen Position erreicht.

Bei einer vorteilhaften Ausführung der Pegelbetätigungsvorrichtung ist die Antriebsvorrichtung wenigstens teilweise teleskopisch ausgebildet und/oder weist (wie bereits erwähnt) wenigstens einen Teleskopzylinderantrieb, insbesondere einen mehrstufigen Teleskopzylinderantrieb mit drei oder mehr teleskopisch ineinander schiebbaren Segmenten, auf. Eine solche Ausführung hat den ganz besonderen Vorteil, dass der zur Verfügung stehende Bauraum besonders gut ausgenutzt wird und dass ein besonders großer, insbesondere vertikaler, Raum für die Verwendung unterschiedlicher Pegel, insbesondere auch besonders großer Pegel, zur Verfügung steht.

Bei einer besonderen Ausführung ist die Ankoppelvorrichtung, insbesondere vollständig, oberhalb der Antriebsvorrichtung angeordnet. Dies hat den besonderen Vorteil, dass der für den Pegel zur Verfügung stehende Raum seitlich nicht eingeschränkt wird. Insbesondere kann vorteilhaft vorgesehen sein, dass die Ankoppelvorrichtung, wenigstens dann oberhalb der Antriebsvorrichtung angeordnet ist, wenn sie sich in der oberen Position befindet. Vorzugsweise ist die Ankoppelvorrichtung auch dann oberhalb der Antriebsvorrichtung angeordnet, wenn sie sich in der oberen Position befindet. Eine solche Ausführung beansprucht besonders wenig Bauraum und ermöglicht es, dass ein großer Raum für die Verwendung unterschiedlicher Pegel, insbesondere auch besonders großer Pegel, zur Verfügung steht. Es ist hierbei auch möglich, dass Teile Antriebsvorrichtung horizontal nebeneinander und/oder dass wenigstens ein Teil der Antriebsvorrichtung horizontal zur Bewegungsmittelachse der Ankoppelvorrichtung versetzt angeordnet sind.

Die Pegelbetätigungsvorrichtung kann vorteilhaft ein, insbesondere im Wesentlichen zylinderförmiges, Gehäuse aufweisen. Das Gehäuse kann dazu ausgebildet sein, einen an die Ankoppelvorrichtung angekoppelten Pegel einzuhausen, wenn sich die Ankoppelvorrichtung in der unteren Position befindet. Alternativ oder zusätzlich kann das Gehäuse derart ausgebildet und/oder angeordnet sein, dass es die Antriebsvorrichtung einhaust oder dass das Gehäuse wenigstens teilweise Teil der Antriebsvorrichtung ist. Beispielsweise kann in einer Wandung des Gehäuses eine Zahnstange integral ausgebildet sein, die Teil der Antriebsvorrichtung, insbesondere Teil eines Getriebes der Antriebsvorrichtung, ist.

In ganz besonders vorteilhafter Weise und nach einem eigenständigen Erfindungsgedanken weist die Pegelbetätigungsvorrichtung einen durch die Antriebsvorrichtung hindurch verlaufenden Kühlmittelkanal auf, durch den hindurch ein flüssiges oder gasförmiges Kühlmittel, insbesondere für eine Luftkühlung, zu dem Pegel transportiert werden kann. Hierbei ist es von besonderem Vorteil, wenn der Pegel im Inneren einen Pegelkühlkanal aufweist, der über die Ankoppelvorrichtung, vorzugsweise automatisch, mit dem Kühlmittelkanal verbunden werden kann. Bei einer ganz besonders vorteilhaften Ausführung ist der Kühlmittelkanal längenveränderbar ausgebildet. Auf diese Weise ist eine permanente Versorgung des Pegels mit Kühlmittel unabhängig von der Stellung der Ankoppelvorrichtung ermöglicht. Beispielsweise kann der Kühlmittelkanal wenigstens zwei teleskopisch ineinander schiebbare Kühlmittelkanalsegmente aufweisen.

In ganz besonders vorteilhafter Weise kann die Pegelbetätigungsvorrichtung als fertig montierte und funktionsfähige Baueinheit ausgebildet sein, die an eine Glasmaschine, insbesondere eine IS-Maschine, ankoppelbar ist, ohne hierfür Teile der Pegelbetätigungsvorrichtung vorübergehend demontieren zu müssen. Bei einer solchen Ausführung ist es vorteilhaft nicht notwendig, die Pegelbetätigungsvorrichtung für das Ankoppeln an eine Glasmaschine zu zerlegen, was den Montagevorgang an sich vereinfacht und darüber hinaus gewährleistet, dass die Pegelbetätigungsvorrichtung genau in dem Zustand zum Einsatz kommt und verbleibt, in dem sie hinsichtlich ihrer Funktionsfähigkeit, insbesondere unmittelbar nach ihrer Herstellung, getestet wurde.

Von ganz besonderem Vorteil ist eine Vorformeinheit für eine Glasmaschine, insbesondere für eine IS-Maschine, die eine erfindungsgemäße Pegelbetätigungsvorrichtung und einen an die Ankoppelvorrichtung angekoppelten Pegel aufweist.

Von ganz besonderem Vorteil ist außerdem eine Glasmaschine, insbesondere eine IS-Maschine, die wenigstens eine erfindungsgemäße Pegelbetätigungsvorrichtung oder eine erfindungsgemäße Vorformeinheit aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1 und 2: ein erstes Ausführungsbeispiel einer erfindungsgemäßen Pegelbetätigungsvorrichtung für eine Glasmaschine,
- Fig. 3 und 4: ein zweites Ausführungsbeispiel einer erfindungsgemäßen Pegelbetätigungsvorrichtung für eine Glasmaschine,
- Fig. 5 und 6: ein drittes Ausführungsbeispiel einer erfindungsgemäßen Pegelbetätigungsvorrichtung für eine Glasmaschine,
- Fig. 7: ein viertes Ausführungsbeispiel einer erfindungsgemäßen Pegelbetätigungsvorrichtung für eine Glasmaschine,
- Fig.8: das Zylindergehäuse des vierten Ausführungsbeispiels einer erfindungsgemäßen Pegelbetätigungsvorrichtung,
- Fig. 9und 10: ein fünftes Ausführungsbeispiel einer erfindungsgemäßen Pegelbetätigungsvorrichtung für eine Glasmaschine, und
- Fig. 11: das Zylindergehäuse des fünften Ausführungsbeispiels einer erfindungsgemäßen Pegelbetätigungsvorrichtung.

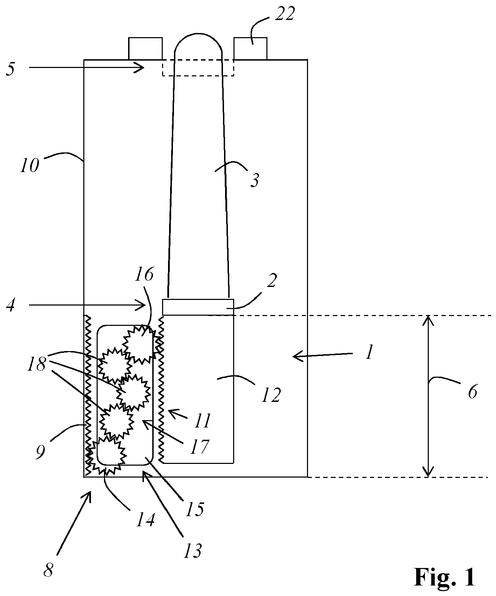

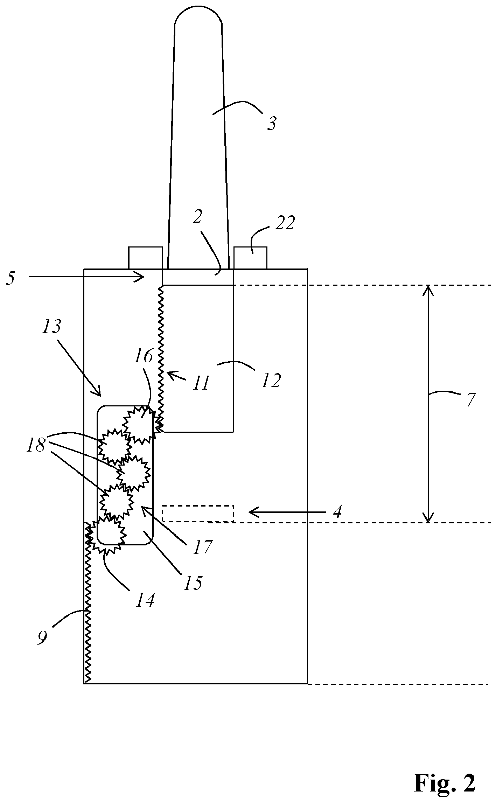

Die Figuren 1 und 2 zeigen ganz schematisch ein erstes Ausführungsbeispiel einer erfindungsgemäßen Pegelbetätigungsvorrichtung. Die Pegelbetätigungsvorrichtung weist eine Antriebsvorrichtung 1 und eine Ankoppelvorrichtung 2 zum Ankoppeln eines Pegels 3 auf.

Pegelbetätigungsvorrichtung weist ein Gehäuse 10 auf. Das Gehäuse 10 ist dazu ausgebildet, einen an die Ankoppelvorrichtung 2 angekoppelten Pegel 3 einzuhausen, wenn sich die Ankoppelvorrichtung 2 in einer unteren Position 4 befindet. Das Gehäuse 10 ist außerdem dazu ausgebildet, das Mündungswerkzeug 22 einer (ansonsten nicht eingezeichneten) Vorform zu halten.

Die Antriebsvorrichtung 1 ist dazu ausgebildet, die Ankoppelvorrichtung 2 vertikal zwischen einer unteren Position 4 und einer (in Figur 1 gestrichelt eingezeichneten) oberen Position 5 zu bewegen. Figur 1 zeigt die Pegelbetätigungsvorrichtung in einer Einstellung, bei der sich die Ankoppelvorrichtung 2 in der unteren Position 4 befindet.

Die Figur 2 zeigt die Pegelbetätigungsvorrichtung in einer anderen Einstellung, bei der sich die Ankoppelvorrichtung 2 in der oberen Position 5 befindet. In Figur 2 ist die untere Position der Ankoppelvorrichtung 2 gestrichelt eingezeichnet.

Der vertikale Abstand 6 eines unteren Endes der Antriebsvorrichtung 1 bis zu der sich in der unteren Position 4 befindlichen Ankoppelvorrichtung 2 ist in ganz besonders vorteilhafter Weise kleiner, als dervertikale Abstand 7 zwischen der unteren Position 4 und der oberen Position 5. Hierdurch ist vorteilhaft erreicht, dass ein großer Raum für die Verwendung unterschiedlicher Pegel, insbesondere auch besonders großer Pegel, zur Verfügung steht. Dies ist bei diesem Ausführungsbeispiel dadurch realisiert, dass die Antriebsvorrichtung 1 ein Getriebe 8 aufweist, das einer (in den Figuren 1 und 2 der besseren Übersichtlichkeit halber nicht eingezeichneten) Antriebseinheit 19 triebtechnisch nachgeschaltet ist.

Das Getriebe 8 weist eine erste Zahnstange 9 auf, die in dem Gehäuse 10 der Pegelbetätigungsvorrichtung, nämlich an der Innenseite einer Wandung des Gehäuses 10, angeordnet ist. Das Getriebe 8 weist außerdem eine zweite Zahnstange 11 auf, die an einem linear verschiebbar gelagerten Halter 12 ausgebildet ist. Der Halter 12 trägt an seinem oberen Ende die Ankoppelvorrichtung 2.

Das Getriebe 8 weist außerdem eine linear verschiebbar gelagerte Zwischeneinheit 13 auf. Die Zwischeneinheit 13 beinhaltet ein erstes Zahnrad 14, das mit der ersten Zahnstange 9 in Eingriff steht und derart angeordnet und in einem Zwischeneinheitsgehäuse 15 der Zwischeneinheit 13 rotierbar gelagert ist, dass es in vertikaler Richtung entlang der ersten Zahnstange 9 abwälzen kann. Die Zwischeneinheit 13 beinhaltet außerdem ein zweites Zahnrad 16, das mit der zweiten Zahnstange 11 in Eingriff steht und derart angeordnet und in dem Zwischeneinheitsgehäuse 15 der Zwischeneinheit 13 rotierbar gelagert ist, dass es in vertikaler Richtung entlang der zweiten Zahnstange 11 abwälzen kann. Das erste Zahnrad 14 und das zweite Zahnrad 16 sind mittels einer Kopplungsanordnung 17 miteinander wirkverkoppelt. Die Kopplungsanordnung 17 beinhaltet mehrere miteinander kämmende Übertragungszahnräder 18, die ebenfalls in dem Zwischeneinheitsgehäuse 15 rotierbar gelagert sind. Allerdings sind durchaus auch andere Ausbildungen der Kopplungsanordnung 17, insbesondere auch in Form anderer Getriebearten, möglich. In dem dargestellten Ausführungsbeispiel liegt zwischen dem ersten Zahnrad 14 und dem zweiten Zahnrad 16 ein Untersetzungsverhältnis von i = 1 vor. Es ist durchaus möglich, auch andere Untersetzungsverhältnisse, insbesondere bei unterschiedlichen Längen der Zahnstangen 9, 11, vorzusehen.

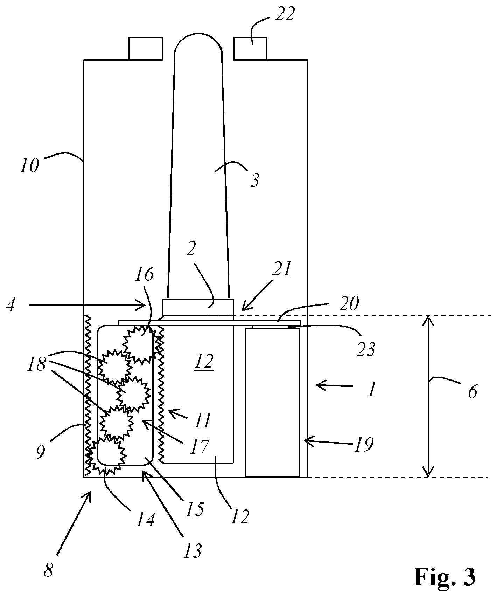

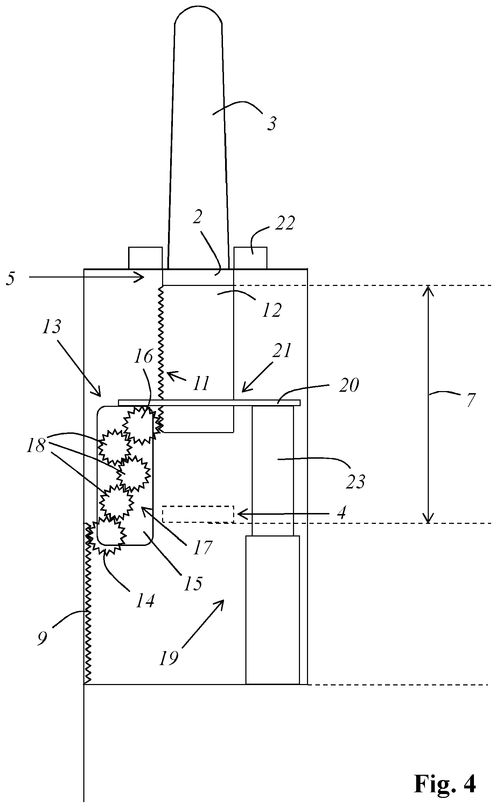

Die Antriebsvorrichtung 1 weist eine (in den Figuren 1 und 2 der besseren Übersichtlichkeit halber nicht eingezeichnete) Antriebseinheit 19 auf, mittels der das Zwischeneinheitsgehäuse 15 relativ zu dem Gehäuse 10 vertikal bewegt werden kann. In den Figuren 3 und 4 ist ein Ausführungsbeispiel einer ähnlich aufgebauten Pegelbetätigungsvorrichtung samt einem Ausführungsbeispiel einer Antriebseinheit 19, die als Teleskopzylinderantrieb ausgebildet ist, dargestellt, was weiter unten im Detail beschrieben ist.

Wenn das Zwischeneinheitsgehäuse 15 ausgehend von der in der Figur 1 dargestellten Stellung, bei der sich die Ankoppelvorrichtung 2 in der unteren Position befindet, mittels der (nicht eingezeichneten) Antriebseinheit 19 vertikal nach oben gedrückt wird, bewegt sich auch der Halter 12 samt der Ankoppelvorrichtung 2 nach oben, wobei der von den Halter 12 relativ zu dem Gehäuse 10 zurückgelegte Weg doppelt so groß ist, wie der von dem Zwischeneinheitsgehäuse 15 zurückgelegte Weg.

Die Figuren 3 und 4 zeigen ein zweites Ausführungsbeispiel einer erfindungsgemäßen Pegelbetätigungsvorrichtung, das ähnlich aufgebaut ist, wie das in den Figuren 1 und 2 gezeigte Ausführungsbeispiel. Die Antriebsvorrichtung 1 des zweiten Ausführungsbeispiels weist eine Antriebseinheit 19 auf, die als, vorzugsweise pneumatisch angetriebener, Teleskopzylinderantrieb ausgebildet ist. Die Zuführung von Druckluft zu dem Teleskopzylinderantrieb ist der besseren Übersichtlichkeit halber nicht eingezeichnet. Insbesondere kann der Teleskopzylinderantrieb an einen Druckluftkanal angeschlossen sein, der durch den Boden des Gehäuses 10 verläuft. Die Antriebseinheit 19 weist ein Abtriebselement 20 auf, das aus einer starren Platte gebildet ist und das starr mit dem Zwischeneinheitsgehäuse 15 und der Kolbenstange 23 des Teleskopzylinderantriebs verbunden ist. Das Abtriebselement 20 weist einen Durchbruch 21 auf, durch den hindurch sich der Halter 12 erstreckt.

Die Figur 3 zeigt eine Stellung, bei der sich die Ankoppelvorrichtung 2 in der unteren Position 4 befindet. Durch eine Beaufschlagung der als Teleskopzylinderantrieb ausgebildeten Antriebseinheit 19 mit Druckluft wird das Abtriebselement 20 und das mit dem Abtriebselement starre verbundene Zwischeneinheitsgehäuse 15 relativ zu dem Gehäuse 10 vertikal nach oben bewegt. Hierdurch bewegt sich auch der Halter 12 samt der Ankoppelvorrichtung 2 nach oben, wobei der von den Halter 12 zurückgelegte Weg relativ zu dem Gehäuse 10 doppelt so groß ist, wie der von dem Zwischeneinheitsgehäuse 15 zurückgelegte Weg. Die Aufwärtsbewegung kann fortgesetzt werden, bis sich die Ankoppelvorrichtung 2 in der oberen Position 5 befindet. Der vertikale Abstand 6 eines unteren Endes der Antriebsvorrichtung 1 bis zu der sich in der unteren Position 4 befindlichen Ankoppelvorrichtung 2 ist in ganz besonders vorteilhafter Weise kleiner, als dervertikale Abstand 7 zwischen der unteren Position 4 und der oberen Position 5.

Mittels des Teleskopzylinderantriebs der Antriebseinheit 19 kann das Zwischeneinheitsgehäuse 15 vertikal zurück nach unten bewegt werden, wobei sich auch der Halter 12 wieder nach unten bewegt, so dass sich die Ankoppelvorrichtung 2 schließlich wieder in der unteren Position 4 befindet. Auch bei der Abwärtsbewegung bewegt sich der Halter 12 samt der Ankoppelvorrichtung 2 doppelt so schnell, wie das von der Antriebseinheit 19 bewegte Zwischeneinheitsgehäuse 15.

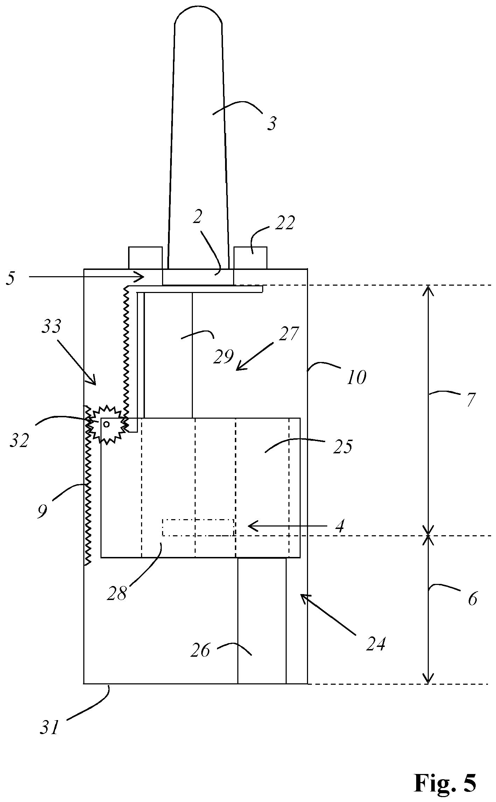

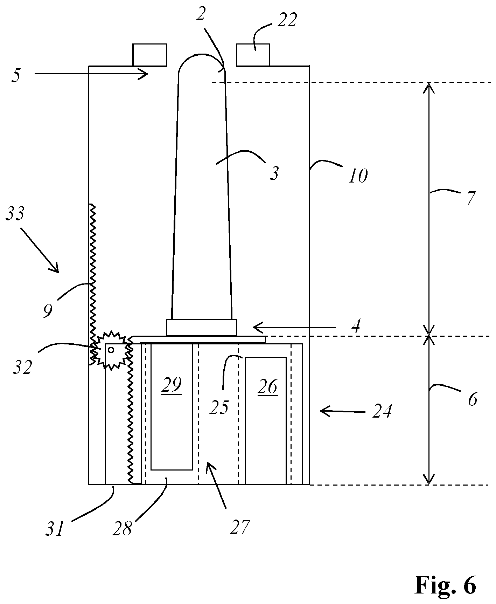

Die Figuren 5 und 6 zeigen ein drittes Ausführungsbeispiel einer erfindungsgemäßen Pegelbetätigungsvorrichtung. Die Figur 5 zeigt eine Stellung, bei der sich die Ankoppelvorrichtung 2 in der oberen Position 5 befindet, während Figur 6 eine Stellung zeigt, bei der sich die Ankoppelvorrichtung 2 in der unteren Position 4 befindet.

Bei dieser Ausführung weist die Antriebsvorrichtung 1 eine erste Antriebseinheit 24 auf, die als Teleskopzylinderantrieb mit einem ersten Zylinder 25 und einer ersten Kolbenstange 26 ausgebildet ist. Die Antriebsvorrichtung 1 weist außerdem eine zweite Antriebseinheit 27 auf, die als Teleskopzylinderantrieb mit einem zweiten Zylinder 28 und einer zweiten Kolbenstange 29 ausgebildet ist.

Die Zylinder 25, 27 der Teleskopzylinderantriebe sind in einem gemeinsamen Zylindergehäuse 30 ausgebildet. Das Zylindergehäuse 30 kann insbesondere um einen einstückigen Grundkörper aufweisen, in dem mehrere, vorzugsweise parallele, Bohrungen (gestrichelt eingezeichnet) eigebracht wurden, um die Zylinder 25, 28 auszubilden. Das Zylindergehäuse 30 ist beweglich, nämlich linear verschiebbar, in dem Gehäuse 10 der Pegelbetätigungsvorrichtung gelagert.

Die erste Kolbenstange 26 stützt sich am Boden 31 des Gehäuses 10 ab. An der zweiten Kolbenstange 29 ist ein Abtriebselement 20 befestigt, das die Ankoppelvorrichtung 2 trägt. An dem Abtriebselement 20 ist eine zweite Zahnstange 11 befestigt, die über ein an dem Zylindergehäuse 30 rotierbar gelagertes Zahnrad 32 mit der Zahnstange 9 in Wirkverbindung steht, um ein Lineargetriebe 33 zu bilden.

Die Teleskopzylinderantriebe 24, 27 sind gegensinnig angeordnet, so dass die Kolbenstangen der Teleskopzylinderantriebe in entgegengesetzte Richtungen ausfahrbar sind. Die erste Antriebseinheit 24 bewirkt eine Bewegung des Zylindergehäuses 30 relativ zu dem Gehäuse 10 der Pegelbetätigungsvorrichtung, während die zweite Antriebseinheit 27 eine Bewegung der Ankoppelvorrichtung 2 relativ zu dem Zylindergehäuse 30 bewirkt.

Das durch die Zahnstange 9, die zweite Zahnstange 11 und das Zahnrad 32 gebildete Lineargetriebe 33 dient dazu, die Bewegungen der Kolbenstangen 26, 29 miteinander derart zu synchronisieren, dass sie gleichzeitig gleich schnelle Bewegungen ausführen. Dies ermöglicht es insbesondere, dass der erste Zylinder 25 einen anderen Durchmesser aufweisen kann, als der zweite Zylinder 28.

Die Zuführung von Druckluft zu der ersten Antriebseinheit 24 ist der besseren Übersichtlichkeit halber nicht eingezeichnet. Insbesondere kann die erste Antriebseinheit 24 an einen (nicht eigezeichneten) Druckluftkanal angeschlossen sein, der durch den Boden 31 des Gehäuses 10 verläuft. Die zweite Antriebseinheit 27 kann an einen (nicht eigezeichneten) Druckluftkanal angeschlossen sein, der von dem ersten Zylinder 25 zu dem zweiten Zylinder 28 verläuft. Auf diese Weise wird die zweite Antriebsvorrichtung 27 über die erste Antriebsvorrichtung 24 mit Druckluft versorgt.

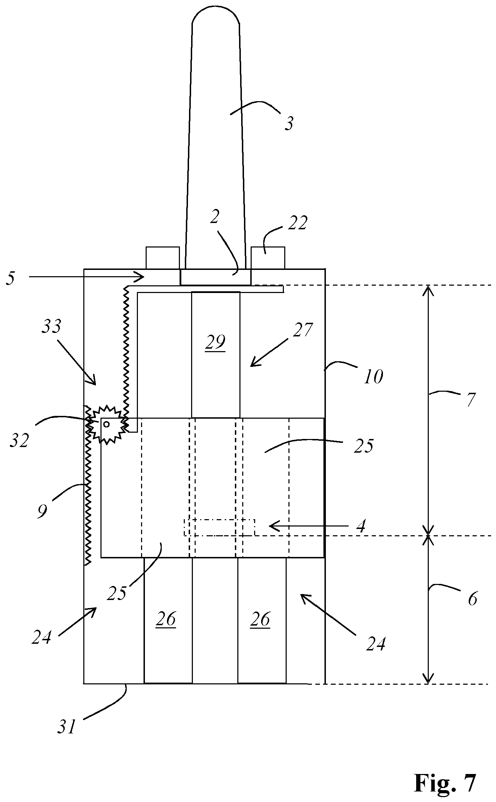

Die Figur 7 zeigt ein viertes Ausführungsbeispiel einer erfindungsgemäßen Pegelbetätigungsvorrichtung, das ähnlich aufgebaut ist, wie das in den Figuren 5 und 6 gezeigte Ausführungsbeispiel.

Im Unterscheid zu dem in den Figuren 5 und 6 gezeigte Ausführungsbeispiel sind zwei erste Antriebseinheiten 24 vorhanden, die triebtechnisch parallel geschaltet sind. Außerdem sind zwei zweite Antriebseinheiten 27 (senkrecht zur Zeichenebene hintereinander) vorhanden, die zueinander triebtechnisch parallel geschaltet sind. Diese Ausführung hat den ganz besonderen Vorteil, dass sie besonders stabil ist und einen symmetrischen Aufbau ermöglicht, so dass ein ungewolltes Verkanten der Bauteile der Antriebsvorrichtung 1 vermieden ist.

Die Zylinder 25,27 der Teleskopzylinderantriebe sind auch bei diesem Ausführungsbeispiel in einem gemeinsamen Zylindergehäuse 30 ausgebildet.

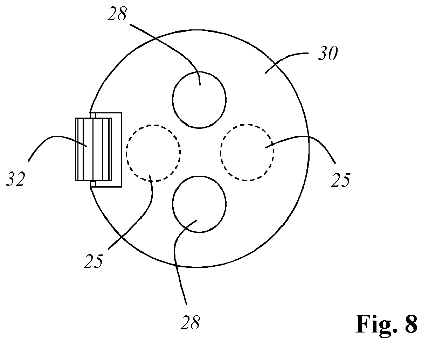

Figur 8 zeigt eine Draufsicht von oben auf das Zylindergehäuse 30. Das Zylindergehäuse 30 weist einen Grundkörper auf, in den parallele Bohrungen eigebracht wurden, um die jeweils zwei Zylinder 25, 28 auszubilden. Das Zylindergehäuse 30 ist beweglich, nämlich linear verschiebbar, in dem Gehäuse 10 der Pegelbetätigungsvorrichtung gelagert.

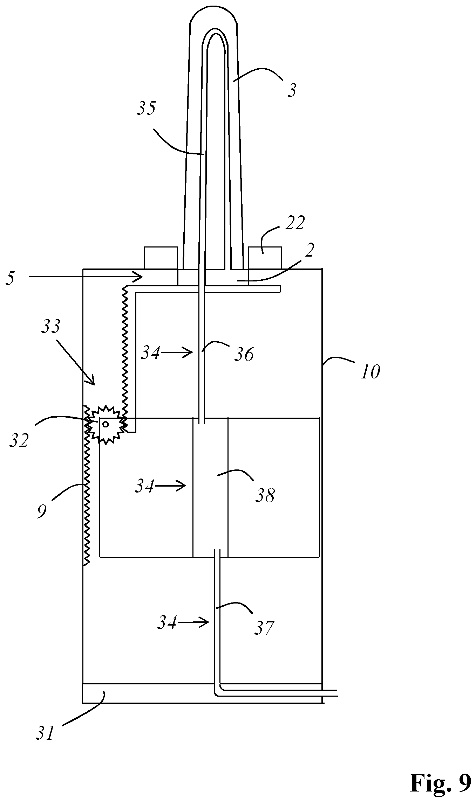

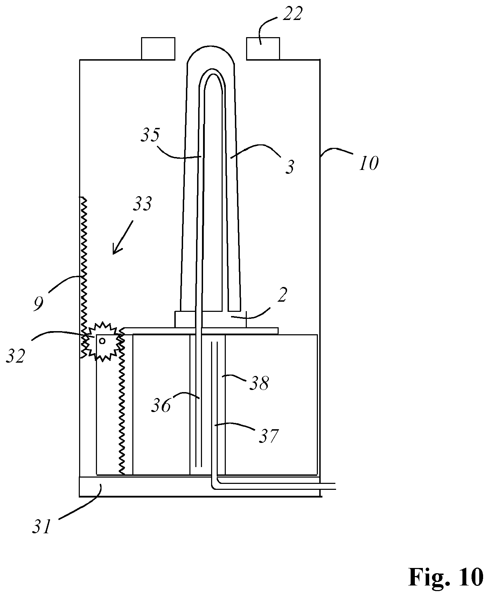

Die Figuren 9 und 10 zeigen ein fünftes Ausführungsbeispiel einer erfindungsgemäßen Pegelbetätigungsvorrichtung, das ähnlich aufgebaut ist, wie das in Figur 7 gezeigte Ausführungsbeispiel. Die Figur 9 zeigt eine Stellung, bei der sich die Ankoppelvorrichtung 2 in der oberen Position 5 befindet, während 10 eine Stellung zeigt, bei der sich die Ankoppelvorrichtung 2 in der unteren Position 4 befindet.

Die Pegelbetätigungsvorrichtung dieser Ausführung weist einen durch die Antriebsvorrichtung 1 hindurch verlaufenden Kühlmittelkanal 34 auf, durch den hindurch ein flüssiges oder gasförmiges Kühlmittel zu dem angekoppelten Pegel 3 transportiert werden kann. Der Pegel 3 weist einen Pegelkühlkanal 35 auf, der über die Ankoppelvorrichtung 2 mit dem Kühlmittelkanal 34 verbunden ist. Der Kühlmittelkanal 34 ist längenveränderbar, nämlich teleskopierbar, ausgebildet. Der Kühlmittelkanal 34 weist ein oberes Kühlmittelkanalsegment 36 und ein unteres Kühlmittelkanalsegment 37 auf, die verschiebbar in ein mittleres Kühlmittelkanalsegment 38 eingreifen.

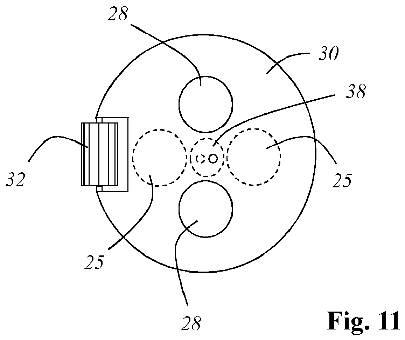

Figur 11 zeigt eine Draufsicht von oben auf das Zylindergehäuse 30. Das Zylindergehäuse 30 weist einen einstückigen Grundkörper auf, in den parallele Bohrungen eigebracht wurden, um die Zylinder 25, 28 auszubilden. Das Zylindergehäuse 30 ist beweglich, nämlich linear verschiebbar, in dem Gehäuse 10 der Pegelbetätigungsvorrichtung gelagert. In dem Zylindergehäuse 30 ist das mittlere Kühlmittelkanalsegment 38 durch eine weitere Bohrung ausgebildet.

### Bezugszeichenliste:

- 1: Antriebsvorrichtung
- 2: Ankoppelvorrichtung
- 3: Pegel
- 4: untere Position
- 5: obere Position
- 6: vertikaler Abstand
- 7: vertikaler Abstand
- 8: Getriebe
- 9: erste Zahnstange
- 10: Gehäuse
- 11: zweite Zahnstange
- 12: Halter
- 13: Zwischeneinheit
- 14: erstes Zahnrad
- 15: Zwischeneinheitsgehäuse
- 16: zweites Zahnrad
- 17: Kopplungsanordnung
- 18: Übertragungszahnräder
- 19: Antriebseinheit
- 20: Abtriebselement
- 21: Durchbruch
- 22: Mündungswerkzeug
- 23: Kolbenstange
- 24: erste Antriebseinheit
- 25: Erster Zylinder
- 26: Erste Kolbenstange
- 27: zweite Antriebseinheit
- 28: Zweiter Zylinder
- 29: Zweite Kolbenstange
- 30: Zylindergehäuse
- 31: Boden
- 32: Zahnrad
- 33: Lineargetriebe
- 34: Kühlmittelkanal
- 35: Pegelkühlkanal
- 36: oberes Kühlmittelkanalsegment
- 37: unteres Kühlmittelkanalsegment
- 38: mittleres Kühlmittelkanalsegment

## Patentansprüche

1. Pegelbetätigungsvorrichtung für eine Glasmaschine, insbesondere für eine IS-Maschine, die eine Antriebsvorrichtung (1) und eine Ankoppelvorrichtung (2) zum Ankoppeln eines Pegels (3) aufweist, wobei die Antriebsvorrichtung (1) dazu ausgebildet ist, die Ankoppelvorrichtung (2) vertikal zwischen einer unteren Position (4) und einer oberen Position (5) zu bewegen, **dadurch gekennzeichnet, dass** der vertikale Abstand (6) eines unteren Endes der Antriebsvorrichtung (1) bis zu der sich in der unteren Position befindlichen Ankoppelvorrichtung (2) kleiner ist, als der vertikale Abstand (7) zwischen der unteren Position und der oberen Position.

2. Pegelbetätigungsvorrichtung nach Anspruch 1, **dadurch gekennzeichnet, dass**
a. die Antriebsvorrichtung (1) pneumatisch angetrieben ist, oder dass
b. die Antriebsvorrichtung (1) hydraulisch angetrieben ist, oder dass
c. die Antriebsvorrichtung (1) einen elektrisch, insbesondere servoelektrisch, angetrieben ist.

3. Pegelbetätigungsvorrichtung nach Anspruch 1 oder 2, **dadurch gekennzeichnet, dass** die Antriebsvorrichtung (1) wenigstens eine Antriebseinheit (19, 24, 27) aufweist oder dass die Antriebsvorrichtung (1) mehrere triebtechnisch in Reihe und/oder triebtechnisch parallel geschaltete Antriebseinheiten (19, 24, 27) aufweist.

4. Pegelbetätigungsvorrichtung nach Anspruch 3, **dadurch gekennzeichnet, dass**
a. die Antriebsvorrichtung (1) wenigstens zwei jeweils als Teleskopzylinderantriebe ausgebildete Antriebseinheiten (19, 24, 27) aufweist, oder dass
b. die Antriebsvorrichtung (1) wenigstens zwei jeweils als Teleskopzylinderantriebe ausgebildete Antriebseinheiten (19, 24, 27) aufweist und die Kolbenstangen (23, 26, 29) der Teleskopzylinderantriebe in unterschiedliche, insbesondere entgegengesetzte, Richtungen ausfahrbar sind, oder dass
c. die Antriebsvorrichtung (1) wenigstens zwei jeweils als Teleskopzylinderantriebe ausgebildete Antriebseinheiten (19, 24, 27) aufweist und die Teleskopzylinderantriebe in einem gemeinsamen Zylindergehäuse (30) ausgebildet sind, insbesondere wobei eine erste Antriebseinheit (24) eine Bewegung des Zylindergehäuses (30) relativ zu einem Gehäuse (10) der Pegelbetätigungsvorrichtung bewirkt, während zumindest eine zweite Antriebseinheit (27) eine Bewegung der Ankoppelvorrichtung (2) relativ zu dem Zylindergehäuse (30) bewirkt.

5. Pegelbetätigungsvorrichtung nach Anspruch 3 oder 4, **dadurch gekennzeichnet, dass** die Antriebsvorrichtung (1) eine erste Antriebseinheit (24) und eine zweite Antriebseinheit (27) aufweist, die wenigstens wenn sich die Ankoppelvorrichtung (2) in der unteren Position (4) befindet in Vertikalrichtung zumindest teilweise räumlich überlappend angeordnet sind.

6. Pegelbetätigungsvorrichtung nach einem der Ansprüche 1 bis 5, **dadurch gekennzeichnet, dass**
a. die Antriebsvorrichtung (1) wenigstens ein Getriebe (8, 33) aufweist, oder dass
b. die Antriebsvorrichtung (1) wenigstens ein Getriebe (8, 33) aufweist, das einen Spindeltrieb aufweist oder ein Lineargetriebe ist oder das ein Lineargetriebe beinhaltet oder das ein Zahnstangengetriebe beinhaltet oder das ein Zugmittelgetriebe beinhaltet.

7. Pegelbetätigungsvorrichtung nach einem der Ansprüche 3 bis 5 und Anspruch 6, **dadurch gekennzeichnet, dass**
a. der Antriebseinheit (19, 24, 27) wenigstens ein Getriebe (8, 33) triebtechnisch nachgeschaltet ist, oder dass
b. der Antriebseinheit (19, 24, 27) wenigstens ein Getriebe (8, 33) triebtechnisch parallel geschaltet ist, oder dass
c. das Getriebe (8, 33) wenigstens einer Antriebseinheit (19, 24, 27) triebtechnisch nachgeschaltet ist und zu wenigstens einer anderen Antriebseinheit (19, 24, 27) triebtechnisch parallel geschaltet ist, oder dass
d. das Getriebe (8, 33) die Bewegungen zweier Antriebseinheiten (19, 24, 27) zueinander synchronisiert.

8. Pegelbetätigungsvorrichtung nach Anspruch 7, **dadurch gekennzeichnet, dass** die wenigstens eine Antriebseinheit (19, 24, 27) und das Getriebe (8, 33) zumindest wenn sich die Ankoppelvorrichtung (2) in der unteren Position (4) befindet in Vertikalrichtung räumlich überlappend angeordnet sind.

9. Pegelbetätigungsvorrichtung nach einem der Ansprüche 3 bis 8, **dadurch gekennzeichnet, dass**
a. die Antriebseinheit (19, 24, 27) eine Linearbewegung eines Abtriebsbauteils (20) bewirkt, und/oder dass
b. die Antriebseinheit (19, 24, 27) einen, insbesondere pneumatisch oder hydraulisch angetriebenen, Teleskopzylinderantrieb aufweist, und/oder dass
c. die Antriebseinheit (19, 24, 27) einen Elektromotor aufweist.

10. Pegelbetätigungsvorrichtung nach einem der Ansprüche 1 bis 9, **dadurch gekennzeichnet, dass**
a. die Antriebsvorrichtung (1) wenigstens teilweise teleskopisch ausgebildet ist, und/oder dass
b. die Ankoppelvorrichtung (2) oberhalb der Antriebsvorrichtung (1) angeordnet ist.

11. Pegelbetätigungsvorrichtung nach einem der Ansprüche 1 bis 10, **dadurch gekennzeichnet, dass**
a. die Pegelbetätigungsvorrichtung ein, insbesondere im Wesentlichen zylinderförmiges, Gehäuse (10) aufweist, oder dass
b. die Pegelbetätigungsvorrichtung ein, insbesondere im Wesentlichen zylinderförmiges, Gehäuse (10) aufweist, das dazu ausgebildet ist, einen an die Ankoppelvorrichtung (2) angekoppelten Pegel (3) einzuhausen, wenn sich die Ankoppelvorrichtung (2) in der unteren Position befindet und/oder das die Antriebsvorrichtung (1) einhaust oder wenigstens teilweise Teil der Antriebsvorrichtung (1) ist.

12. Pegelbetätigungsvorrichtung nach einem der Ansprüche 1 bis 11, **dadurch gekennzeichnet, dass**
a. ein zu der Ankoppelvorrichtung (2) verlaufender Kühlmittelkanal (34) durch die Antriebsvorrichtung (1) hindurch verläuft, oder dass
b. ein zu der Ankoppelvorrichtung (2) verlaufender Kühlmittelkanal (34) durch die Antriebsvorrichtung (1) hindurch verläuft, der längenveränderbar ausgebildet ist, oder dass
c. ein zu der Ankoppelvorrichtung (2) verlaufender Kühlmittelkanal (34) durch die Antriebsvorrichtung (1) hindurch verläuft, der wenigstens zwei teleskopisch ineinander schiebbare Kühlmittelkanalsegmente (36, 37, 38) aufweist.

13. Pegelbetätigungsvorrichtung nach einem der Ansprüche 1 bis 12, **dadurch gekennzeichnet, dass** die Pegelbetätigungsvorrichtung als fertig montierte und funktionsfähige Baueinheit an eine Glasmaschine, insbesondere eine IS-Maschine, ankoppelbar ist, ohne hierfür Teile der Pegelbetätigungsvorrichtung demontieren zu müssen.

14. Vorformeinheit, die eine Pegelbetätigungsvorrichtung nach einem der Ansprüche 1 bis 13 und einen an die Ankoppelvorrichtung (2) angekoppelten Pegel (3) aufweist, für eine Glasmaschine, insbesondere eine IS-Maschine, oder Glasmaschine, insbesondere IS-Maschine, die wenigstens eine Pegelbetätigungsvorrichtung nach einem der Ansprüche 1 bis 13 aufweist oder die eine Vorformeinheit mit einer Pegelbetätigungsvorrichtung nach einem der Ansprüche 1 bis 13 aufweist.

15. Verwendung einer Pegelbetätigungsvorrichtung nach einem der Ansprüche 1 bis 14 bei der Herstellung von Glasbehältern, die ein Fassungsvolumen von mehr als 4 Litern, insbesondere von genau 5 Litern oder mehr als 5 Litern, aufweisen, insbesondere im Press-Blas-Verfahren.
